(19) Europäisches Patentamt
European Patent Office
Office européen des brevets

(11) **EP 1 564 451 B1**

(12) **EUROPEAN PATENT SPECIFICATION**

(45) Date of publication and mention
of the grant of the patent:
**03.04.2013 Bulletin 2013/14**

(51) Int Cl.:
***C08G 18/66*** (2006.01)    ***C09K 3/10*** (2006.01)
***F16J 15/10*** (2006.01)

(21) Application number: **05002786.1**

(22) Date of filing: **10.02.2005**

(54) **Method of producing a sealing member**

Verfahren zur Herstellung eines Abdichtungselements

Procédé de fabrication d'un élément d'étanchéité

(84) Designated Contracting States:
**DE GB**

(30) Priority: **10.02.2004 JP 2004034059**

(43) Date of publication of application:
**17.08.2005 Bulletin 2005/33**

(73) Proprietors:
• **INOAC CORPORATION**
**Nagoya-shi,**
**Aichi 450-8691 (JP)**
• **Rogers Inoac Corporation**
**Tokyo 104-0061 (JP)**

(72) Inventor: **Sato, Tadashi**
**Atsuta-ku**
**Nagoya-shi**
**Aichi 456-0068 (JP)**

(74) Representative: **Maiwald Patentanwalts GmbH**
**Elisenhof**
**Elisenstrasse 3**
**80335 München (DE)**

(56) References cited:
**WO-A-02/06863    WO-A2-02/062863**

• **DATABASE WPI Week 200379 Derwent Publications Ltd., London, GB; AN 2003-847105 XP002479612 & JP 2003 040958 A (null) 13 February 2003 (2003-02-13)**

**Description**

BACKGROUND OF THE INVENTION

The present invention relates to a sealing member and a method of producing the same, and more particularly to a sealing member suitable for being disposed between the margin of a liquid crystal display screen in the display of portable telecommunication equipment such as a portable telephone or the margin of a microphone or the like and the internal surface of a case thereof, and a method of producing the same.

Within electrical machinery and apparatus such as a television set, a computer, a portable telephone, or a display of a personal digital assistant, an internal apparatus such as a liquid crystal display, a microphone or a speaker is generally arranged such that the internal apparatus faces the outside of its casing. Electrical machinery and apparatus having such a structure achieves dust control, the prevention of light leak from a backlight and the like, and the prevention of backlash, for example, by laying a sealing member between the margin of an internal apparatus such as a liquid crystal display and its casing. Japanese Laid-Open Patent Publication No. 2001-100216 discloses a polyurethane foam as the sealing member above. This polyurethane foam is formed according to a mechanical froth method, and easily deformed with a low load at a 25% compression, and a plastic film as a back-up material is integrally formed on a single side of the foam.

WO 02/062863 discloses a flame retardant polyurethane foam or elastomer which can be used for sealing purposes.

JP 2003-40958 describes an antistatic urethane sealing sheet formed by the hardening of urethane foam raw material.

However, for a small apparatus exemplified by recent portable telephones, an increase and sophistication in its function, and lightweight have been desired. Based on this, a performance requirement for the sealing member above has become more sophisticated. For example, the above increase and sophistication in function for recent portable telephones have been carried out by attaining an increase in parts-integration degree by the unification of the IC size to be used, the saving of space by introducing a very large-scale integration (VLSI), and the multi-layering of a substrate. When a lot of parts are integrated within the casing of a portable telephone as described above, naturally the increase of the integration degree makes the internal structure thereof, for example, the interlocking structure of the casing complicated.

This causes the fluctuation of some sites, because when various internal apparatuses are incorporated within the casing, a gap between the internal apparatuses and the casing is not constant. The sealing member is arranged between the internal apparatuses and the casing, and develops predetermined or more sealing properties under compression. However, a sealing member which maintains a predetermined thickness before incorporation, and sufficiently develops sealing properties to a wide range of compression ratio from low compression to high compression corresponding to variation of the gap size after incorporation has been required.

Generally the sealing properties of a sealing member are evaluated as to whether the sealing member is easily deformed by a load or not. Therefore, in order to sufficiently develop the sealing properties when the sealing member is highly compressed, not a high-density foam which easily achieves a solid state due to a high load, but a low-density soft polyurethane foam, an olefin foam such as polyethylene foam or polypropylene foam, or a rubber foam, or the like is used. However, a soft polyurethane foam is processed into a sheet having a required thickness by slicing after the polyurethane foam has been foamed in the form of a slab, and thus it has no skin layer and is poor in adhesive properties. Therefore, a soft polyurethane foam does not excellence in dust-proof performance and light-blocking performance. In addition, an olefin foam or a rubber sponge is also generally provided with a predetermined thickness by slicing, as well as a soft polyurethane foam. Therefore, there a problem is caused similar to that of the above soft polyurethane foam. In addition to this, a sealing member having a skin layer can be also produced from the above raw material, though the compression set of the produced sealing member is large, and thus it is difficult for the sealing member to retain stable sealing properties for a long period of time. Furthermore, since the sealing member has a large cellular diameter, it causes problems in dust-proof performance and light-blocking performance.

In addition, for the casings of recent various electrical machinery and apparatuses, a light-weight and high-strength material, for example, a magnesium alloy or the like has been positively employed. Since such material has generally high electric conductivity, an electric current easily flows through the casing. In order to effectively avoid disadvantages such as the generation of electromagnetic waves based on this, it would be necessary to consider that a material having a low relative dielectric constant, i.e., a material having high insulating properties should be employed. However, the above relative dielectric constant is essentially a material-intrinsic value, and thus it was difficult to select a material having both sealing properties and a low relative dielectric constant together.

SUMMARY OF THE INVENTION

In order to overcome the problems described above and to accomplish the desired objects, a sealing member made according to the present invention is a sealing member that comprises an elastic sheet having a density in a range of 100 to 250 kg/m$^3$ in which the sheet was formed by reacting and curing a polyurethane-foam raw material having 100% by volume of a resin raw material and 300% by volume or more of a foam-forming gas mixed therewith, the elastic sheet having a compression load deflection at 50% in the range of 0.003 to 0.025 MPa, and the compression load deflection at 75% thereof being in the range of 0.02 to 0.40 MPa, wherein the resin raw material contains polyol and isocyanate as a main raw material and a foam stabilizer as an auxiliary material.

In order to overcome the problems described above and to accomplish the desired objects, the method of producing a sealing member, according to the invention is a method of producing a sealing member as disclosed in claim 1 which comprises supplying a resin raw material containing polyol and isocyanate as a main raw material and a foam stabilizer as an auxiliary material; feeding a polyurethane-foam raw material having 100% by volume of the resin raw material and 300% by volume or more of a foam-forming gas mixed, onto a substrate film; controlling the thickness of the polyurethane-foam raw material to be within a range of 0.3 to 3.0 mm; and promoting the reaction and curing of the fed polyurethane-foam raw material so as to produce an elastic sheet comprising a polyurethane-foam having a thickness in the range of 0.3 to 3.0 mm, a density set a range of 100 to 250 kg/m$^3$, a compression load deflection at 50% in a range of 0.003 to 0.025 MPa, and a compression load deflection at 75% in a range of 0.02 to 0.40 MPa.

BRIEF DESCRIPTION OF THE DRAWINGS

The invention, together with objects and advantages thereof, may best be understood by reference to the following description of the presently preferred embodiments together with the accompanying drawings in which:

Fig. 1 is a schematic perspective view showing a preferred embodiment of a sealing member in accordance with the present invention, wherein a part of the sealing member has been cut away;
Fig. 2 is a flow chart showing a method of producing a sealing member of the embodiment;
Fig. 3 is a schematic view showing one example of a production apparatus for producing a sealing member of the example;
Fig. 4a is a schematic view showing one example of a production apparatus for producing a sealing member in a modified example; and
Fig. 4b is a schematic view showing one example of a production apparatus for producing a sealing member in another modified example.

DETAILED DESCRIPTION OF THE PREFERRED EMBODIMENTS

A a method of producing a sealing member according to the present invention will be now hereinafter explained with preferred examples enumerated with reference to attached drawings. The inventor of the present application found the following: when an elastic sheet for use as a sealing member is produced according to a mechanical froth method, the density of the sealing member is decreased by increasing the amount of a foam-forming gas for forming a cell; and by using such a sealing member whose density was decreased, the sufficiently low hardness of the sealing member can be attained at such a high compressed state such that the sealing member could not have been accommodated there to, and sufficient sealing properties can be ensured for a small gap at an interlocking portion of a casing such as in a portable telephone.

With respect to a polyurethane-foam raw material as prepared according to a mechanical froth method, the following two points are experimentally known: (1) When the amount of a foam-forming gas is increased, the apparent viscosity of the polyurethane-foam raw material is increased. Therefore, when the thickness is controlled by contact with a roller or the like, the polyurethane-foam raw material which has come into contact with the roller is not easily released from the roller, whereby the surface of the polyurethane-foam raw material which come into contact with the roller is roughened. (2) When an elastic sheet having a low density is produced, the thinner the thickness, the coarser the surface of the elastic sheet becomes.

Thus, in order to avoid this phenomenon, the present inventor tried to use a sheet of material having a smooth surface for controlling the thickness of a polyurethane-foam raw material to find that a sealing member on which the surface of the resultant polyurethane-foam is prevented from roughening and a good surface profile can be obtained. It should be noted that in the present invention, the sealing properties of a sealing member which are part of its characteristic physical properties are prescribed by the compression load deflection at 50% (hereinafter referred to as "50% CLD") and the compression load deflection at 75% (hereinafter referred to as "75% CLD").

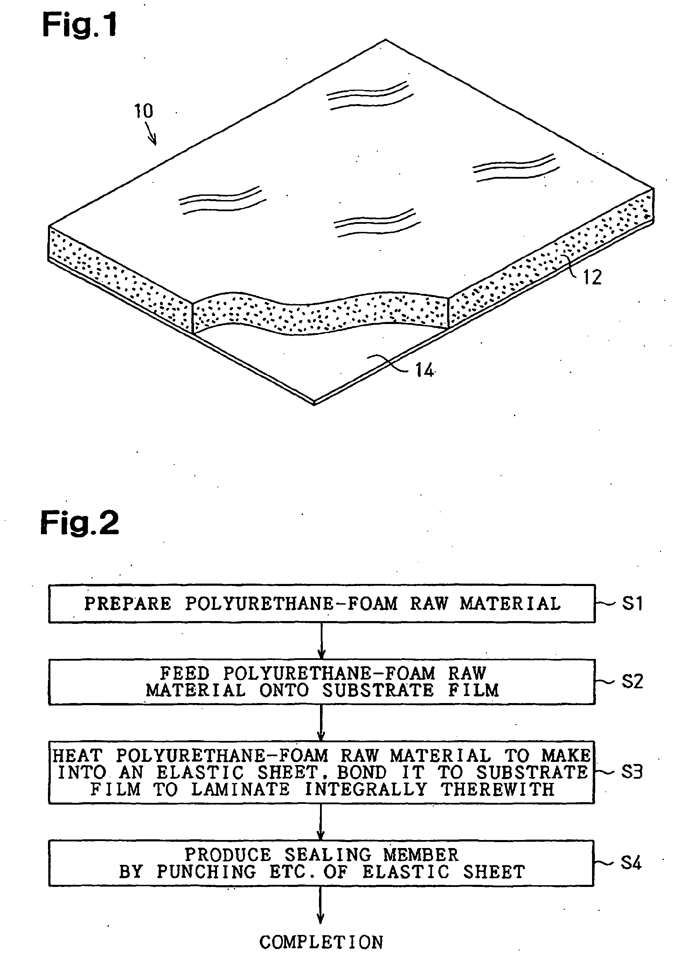

As shown in Fig. 1, a sealing member 10 essentially comprises a foamed elastic sheet 12 and a substrate film 14, the elastic sheet 12 providing required cushioning properties, flexibility, and the sealing properties mentioned above, the substrate film 14 being laminated on one side of this elastic sheet 12 and enhancing the structural strength of the sealing member 10. This elastic sheet 12 is produced according to a mechanical froth method, which is publicly known. Specifically, a polyurethane-foam raw material (hereinafter simply referred to as "a raw material") M is prepared by mixing a resin raw material and a foam-forming gas in a predetermined amount, the resin raw material comprising polyol and isocyanate as a main raw material and a foam stabilizer as an auxiliary material. This raw material M is continuously fed onto a substrate film 14 which is utilized also as transfer means in the production process. Furthermore, the upper side of the raw material M is provided with a surface protective film 16. Thus, the raw material M is sandwiched between the upper and lower two films 14, 16, and shaped into a sheet form with its surface protected from roughening and its thickness controlled, whereby an elastic sheet 12 is produced. This mechanical froth method and individual raw materials therefore, and the like are in detail disclosed in, for example, Japanese Examined Patent Publication No. 53-8735. To sum up, a mechanical froth method as used herein means a method of obtaining a foam, comprising introducing a gas into a liquid material, and mechanically mixing them.

The density of the elastic sheet 12 thus derived is set to 100 to 250 kg/m$^3$, and the thickness is set to 0.3 to 3.0 mm. Thus, by attaining such a density, the 50% CLD is set to the range of 0.003 to 0.025 MPa and the 75% CLD is set to the range of 0.02 to 0.40 MPa. Furthermore, the relative dielectric constant when the each frequency is 10 kHz, 100 kHz and 1 MHz is set to the range of 1 to 2.0, wherein the term "50% CLD" indicates a load which is required when the elastic sheet 12 is physically compressed by 50%, that is, the hardness of the elastic sheet 12 when physically compressed by 50%, while the term "75% CLD" indicates a load which is required when the elastic sheet 12 is physically compressed by 75%, that is, the hardness of the elastic sheet 12 when physically compressed by 75%. If these two values are higher than the preferred range mentioned above, the elastic sheet 12 is excessively hard when physically compressed by 50% or 75%, and thus poor in flexibility, whereby the elastic sheet 12 can not sufficiently attain sealing properties. Furthermore, a load applied to a casing is excessively increased, and thus when the final product is used, the casing or the like may cause deflections, cracks, chips and/or other physical defects. On the other hand, if the values of 50% CLD and 75% CLD are lower than the preferred range mentioned above, it is difficult to shape the elastic sheet 12.

Furthermore, when the density is less than 100 kg/m$^3$, it is difficult to homogeneously mix a foam-forming gas with a resin raw material in the production process according to a mechanical froth method. Therefore, bubbles for forming cells are not stably retained, whereby problems such as a cellular roughening to make the shape and/or size of the cell uneven, and the occurrence of voids will be caused. As a result, the development of satisfactory sealing properties will be inhibited. On the other hand, when the density is larger than 250 kg/m$^3$, a preferred value of each of the 50% CLD, the 75% CLD, and the relative dielectric constant as described above will not be provided. Besides, when the thickness is less than 0.3 mm, it is difficult to derive the elasticity, the satisfactory sealing properties may not be attained. Incidentally, the upper limit of the thickness is 3 mm, when use in an apparatus such as a portable telephone, wherein space-saving properties are required, is taken into consideration. Furthermore, when the interlocking structure of the casing of a portable telephone has, for example, a gap of about 0.25 mm and a gap of about 0.5 mm, a sealing member of the present invention, whose thickness is set to about 1 mm, is compressed to 0.5 mm with sealing properties maintained when physically compressed by 50%, while it is compressed to 0.25 mm with sealing properties maintained when physically compressed by 75%, and thus it is a preferable sealing member.

The term "relative dielectric constant" as used herein means the value of a ratio of an electric flux density to an electric field density, divided by the vacuum dielectric constant, wherein the minimum of a relative dielectric constant is theoretically 1. That is, the sparser an object to be determined is (e.g., the structure of foam constituting an elastic sheet 12 in the present invention), the lower its relative dielectric constant. Thus, in the present invention, the density of a sealing member 10 is lowered so as to increase its porosity, whereby the relative dielectric constant when each frequency is 10 kHz, 100 kHz and 1 MHz is set in the range of 1 to 2.0. This is because when the relative dielectric constant is larger than 2.0, the sealing member 10 is inferior in insulating performance, whereby satisfactory insulating characteristics can not be exerted. The density of the structure of a polyurethane foam constituting an elastic sheet 12 can be essentially represented by the porosity. This porosity can be increased by decreasing the density of the foam. Specifically, the porosity is increased by increasing the mixing ratio of a foam-forming gas, for example, an inert gas such as nitrogen, as mixed into a raw material M. The porosity is preferably set to 76% by volume or more.

In order to provide a preferable sealing properties for a sealing member 10, the cellular diameter of foam constituting the sealing member 10 is set to the range of 20 to 500 $\mu$m, preferably 20 to 300 $\mu$m. When this value is larger than 500 $\mu$m, the sealing member 10 is decreased in dust-proof performance and/or light-blocking effect. Furthermore, the smaller the cellular diameter of foam is, the higher the sealing properties of the sealing member 10. On the other hand, when the cellular diameter of the foam is less than 20 $\mu$m, the control of the cellular diameter is complicated, whereby the production of the foam is difficult, and thus it is not practicable. The surface of a sealing member 10 of the present invention is provided with a skin layer, provided that otherwise any after-processing or the like is not carried out, since a sealing member 10 is produced according to a mechanical froth method. This is preferable in the light of the enhancement of sealing properties, because adhesive properties to an object to be sealed can be structurally enhanced thereby.

A raw material M for producing an elastic sheet 12 of a sealing member 12 having such physical properties is essentially in accordance with the contents disclosed in Japanese Examined Patent Publication No. 53-8735. However, in order to set each of the density and the relative dielectric constant to the range described above, the mixing ratio of a foam-forming gas to a resin raw material, the resin raw material comprising polyol and isocyanate as a main raw material and a foam stabilizer as an auxiliary material, and the kind of the polyol as a main raw material are specified. That is, the mixing ratio of the foam-forming gas is set to be 300% by volume or more to 100% by volume of the resin raw material. When this mixing ratio is less than 300% by volume, the density of the resultant elastic sheet 12 does not attain 250 kg/m$^3$ or less, whereby the sealing properties at the higher compression ratio of the sealing member 10 can not be secured. Furthermore, the polyol is desirably used as a repeated unit (referred to as "Unit") of each of PO (propylene oxide) and/or PTMG (tetrahydrofuran subjected to ring-opening polymerization) or the like, except EO (ethylene oxide; $(CH_2CH_2O)_n$). This is because when a polyol including an EO Unit in a large amount is used, the resultant produced sealing member 10 is provided with hygroscopic properties, and the relative dielectric constant of the sealing member 10 is resultantly increased. Specifically, the prescribed relative dielectric constant described above can be attained by setting the percentage of an EO Unit (or an EO Unit ratio) in a polyol to 20% or less. For example, when a polyol to be used merely consists of a PO-Unit and an EO Unit, this polyol is set to be within the range of [the PO Unit]: [the EO Unit] = 100:0 to 80:20. In the present invention, the percentage of an EO Unit is referred to as "EO content".

In order to enhance the structural strength of a sealing member 10 to improve the handling properties of the product, a substrate film 14 is monolithically laminated to an elastic sheet 12. As hereinafter described with respect to a production method, this substrate film 14 also serves as a transfer means for a raw material M in a production apparatus 30. Therefore, the substrate film 14 preferably comprises any resin having low heat-shrinkable properties, such as polyethylene terephthalate (PET), the resin having a physical strength resistible to a tensile force applied by a roller machine 32, and resistance properties to heat applied by a heating means 38. In addition, a film comprising a resin such as polyolefin, polyester, polyamide, polyvinyl chloride can be also employed, though it is preferred to employ PET also in terms of cost in particular. Depending upon the quality of material, the thickness of a substrate film 14 is set to the range of several decades to 500 $\mu$m, and preferably about 25 to 125 $\mu$m. The thickness of this extent will not adversely affect the sealing properties of the sealing member 10 even when the substrate film 14 is laminated to an elastic sheet 12.

Example of Production Method

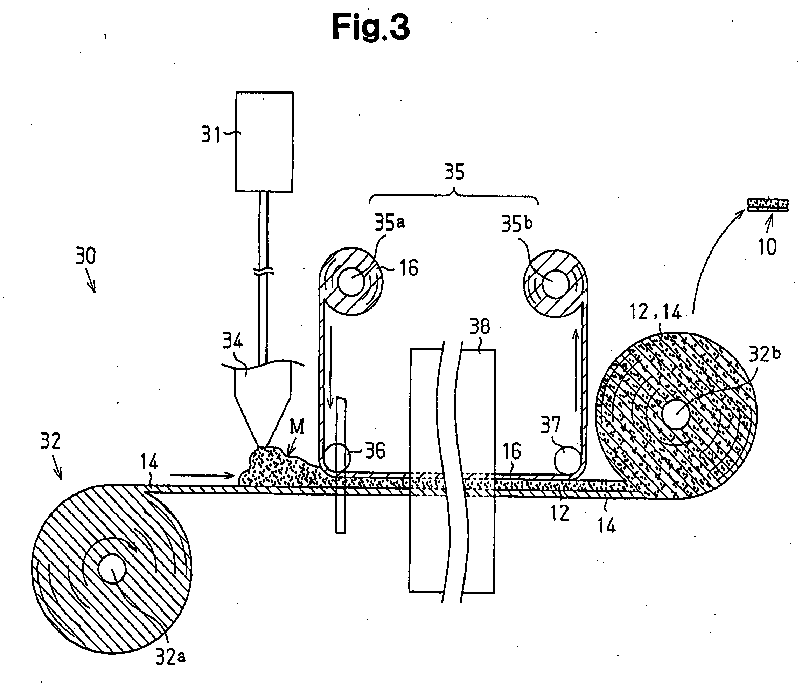

A preferred example of an apparatus for producing a sealing member of the present example, and a method of producing the sealing member using the production apparatus will now be hereinafter explained. As shown in Fig. 2, the production method of the sealing member 10 comprises the step S1 of providing and preparing a raw material, the step S2 of feeding and shaping the raw material, the heating step S3, and the final step S4. The sealing member 10 is preferably produced by means of a production apparatus 30 as shown in Fig. 3. This production apparatus 30 comprises a mixing section 31, a roller mechanism 32, a discharge nozzle 34, a surface-protecting mechanism 35, thickness-controlling means 36 such as a roller, and heating means 38 such as a tunnel-type of heating furnace. In the mixing section 31, a main raw material, various auxiliary materials and a foam-forming gas and the like are mixed with each other so as to prepare a raw material M according to a mechanical froth method. The roller mechanism 32 comprises a supply roll 32a and a product-collecting roll 32b. The supply roll 32a serves as transfer means for the raw material M, by which a substrate film 14 comprising a PET film is driven from a driving source (not shown). The discharge nozzle 34 feeds the raw material M onto the substrate film 14. The surface-protecting mechanism 35 comprises a supply roll 35a and a collecting roll 35b. The roller of the thickness-controlling means 36 is positioned near the substrate film 14 at the site downstream of the supply roll 35a. Thus the supply roll 35a and the collecting roll 35b are driven by driving means (not shown), whereby a surface-protecting film 16 is removed along the upper surface of the substrate film 14, and rewound by the collecting roll 35b via the roller of the thickness-controlling means 36 and a guide roll 37. The surface-protecting film 16 comprises a PET film, and passes between the raw material M fed onto the substrate film 14 and the thickness-controlling means 36, whereby the thickness-controlling means 36 is prevented from directly coming into contact with the raw material M in the side downstream of the discharge nozzle 34. The thickness-controlling means 36 controls the raw material M to be a predetermined thickness on the side downstream of the discharge nozzle 34. The heating means 38 is provided at the side downstream of the thickness-controlling means 36. The raw material M is reacted and cured on a flat surface, though it may be reacted and cured as required in a shaping die or on a releasing paper or the like.

The roller mechanism 32 is a mechanism which feeds the substrate film 14 to a production line while applying a tensile force to the substrate film 14, and collects the resultant sealing member 10. The supply roll 32a is wound with the substrate film 14, and delivers the substrate film 14 under control. The discharge nozzle 34 feeds the raw material M onto the substrate film 14 transferred under control, the upper end of which is connected with the mixing section 31. The step S1 of providing and preparing a raw material as carried out in the mixing section 31 is a step wherein the raw material M for the elastic sheet 12 is provided from a main raw material and various auxiliary materials and mixed.

In this step, as described above, by means of the surface-protecting film 16, the thickness-controlling means 36 is prevented from coming into contact with the raw material M fed onto the substrate film 14. Furthermore, in a similar way to the substrate film 14, the surface-protecting film 16 preferably comprises any resin having low heat-shrinkable properties, such as PET, the resin having a smooth surface, having a physical strength resistant to a tensile force applied by the surface-protecting mechanism 35, and having resistance properties to heat applied by the heating means 38. Furthermore, after the raw material M has passed through the heating means 38 with its surface leveled, the surface-protecting film 16 is released from the surface of the elastic sheet 12 which has been produced by heating and curing the raw material M. Therefore, a releasing agent such as a silicone material is previously applied to the contact area of the surface-protecting film 16 with the raw material M.

The thickness-controlling means 36 shapes the raw material M discharged onto the substrate film 14 into a sheet material having a required thickness, and thus uses a roller in this example. When the raw material M has passed through this thickness-controlling means 36, the step S2 of feeding and shaping the raw material is completed. In this example, the thickness of the sealing member 10 produced by heating and curing the raw material M is set. The raw material M before heating, which is prepared according to the mechanical froth method, is not essentially different in thickness from the sealing member 10 after heating, which is produced from this raw material M, and thus even if a target thickness is set by means of the thickness-controlling means 36, no problem is caused. In addition, the heating means 38 applies heat to the raw material M with a thickness predetermined under control so as to develop the reaction and curing to obtain the elastic sheet 12. When the raw material M has passed through this heating means 38, the heating step S3 is completed. Thus, since the raw material M is heated and cured on the substrate film 14, resultantly the elastic sheet 12 and the substrate film 14 effectively utilize the adhesion effect of the raw material M, whereby the elastic sheet 12 is firmly bonded to the substrate film 14 and integrally laminated thereon. In the final step S4, a long elastic sheet 12 produced by the individual steps S1 to S3 is obtained, and if necessary, it is punched out in the shape of a sealing member 10 which is a final product, and furthermore, a final inspection is carried out. The long elastic sheet 12 may be rewound for collection by means of the product-collecting roll 32b, while a final inspection is carried out, so as to be shipped in the shape as it is. In such a production mode, the length of the elastic sheet 12 is preferably 5 m or more. In this case, the processing for providing a required shape for the long elastic sheet 12 and processing such as taping and punching can be continuously carried out, whereby it can be expected that the cost of production is lowered due to an improvement in productivity.

(Modified Example)

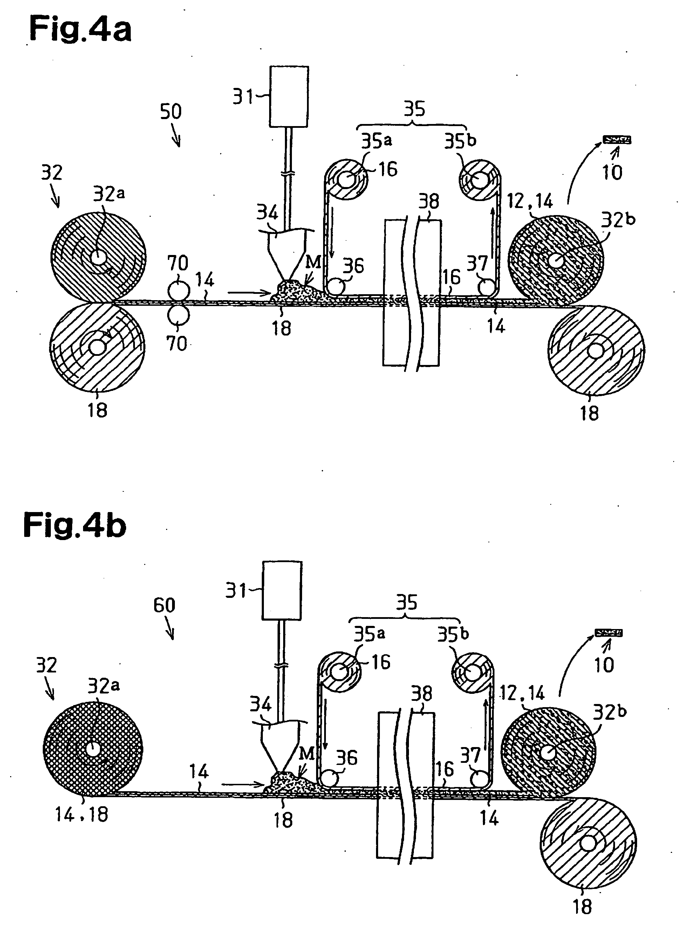

In the example described above, a long substrate film 14 which constitutes a part of the sealing member 10 is directly fed into the production process, whereby the substrate film 14 is utilized also as a carrier film. However, the present invention is not limited thereto. For example, as in production apparatuses 50 and 60 as shown in Figs. 4a and 4b, a sealing member 10 can be produced by a method comprising the steps of separately preparing a carrier film 18, and laminating a substrate film 14 thereto by using pressure rolls 70 or the like (see Fig. 4a) or otherwise previously laminating the substrate film 14 to the carrier film 18 such that the carrier film 18 can be easily released (see Fig. 4b). In this case, the role as a carrier of transferring a raw material M with a tensile force applied can be separated, whereby the thickness of the substrate film 14 can be rendered thinner, and a reduction in cost can be expected due to the employment of a more inexpensive material.

Besides, in the example described above, the thickness of the raw material M is controlled by means of the thickness-controlling means 36 through the surface-protecting film 16, whereby the thickness of the sealing member 10 is controlled, while it is intended to be able to protect the surface of the raw material M from roughening with the surface profile leveled. However, the surface-protecting film 16 is not indispensable. For example, a releasing agent is continuously provided on the surface of the roller of a thickness-controlling means 36 so as to enhance release properties between the roller and the raw material M, whereby the surface of the raw material M can be also protected from roughening. In this case, the surface-protecting film 16 is not necessary, whereby trouble during production is decreased, and thus a reduction in cost can be expected.

In addition, although in the example described above and the modified example, an embodiment wherein the raw material M is provided from the upper side of the substrate film 14 is employed, but this embodiment is not particularly limited thereto. For example, the following method can be employed, in which the method comprises the steps of:

providing both a substrate film 14 and a surface-protecting film 16 downward from above, feeding a raw material M into a narrow gap between these two films 14 and 16 while
controlling the thickness, and applying heat to the raw material M and curing the same while retaining the raw material M in the gap and making the best use of the
viscosity of this raw material M itself. In this case, even if the viscosity of the raw material M is not sufficiently large, the raw material M is merely removed toward the lower sided to be transferred according to the production process, and furthermore, the thickness of the raw material M, i. e., the space to be filled therewith is substantially restricted by the substrate film 14 and the surface-protecting film 16, whereby is no problem is caused in connection with the production process and the quality, and the degrees of freedom for installing a production apparatus can be enhanced.

Examples

Hereinafter, examples will be given, wherein sealing members of the present invention were produced from foam-raw materials under conditions described in Tables 1 and 2, and the sealing properties and the like were evaluated.

Example 1 With Respect to Difference in Density, and 50% CLD and 75% CLD

One hundred parts by weight of polyether polyol-A were mixed with 3 parts by weight of a cross-linking agent (1,4-butanol), 20 parts by weight of a thickening agent (aluminum hydroxide), 0.1 part by weight of a metallic catalyst (Stannous Octoate), and 3 parts by weight of a foam stabilizer (a silicone material; including a diluting solvent) so as to obtain a mixture. Into this mixture, nitrogen (a foam-forming gas), and polyisocyanate (trade name "C-1130"; NIPPON POLYURETHANE INDUSTRY CO., LTD.; crude MDI, NCO content: 31%) whose isocyanate index was set to 0.9 to 1.1 were blended at a flow rate of 0.1 NL/min so that the percentage described in Table 1 could be provided, and the blend was sheared to obtain a raw material M. This foam raw material M was fed from a discharge nozzle 34 onto a substrate film (made from PET) having a required thickness, which is continuously provided from a supply roll 32a in a state in which a tensile force is applied onto a roller machine 32, and the foam raw material M was set to a predetermined thickness by thickness-controlling means 36. Thereafter, the raw material M was heated by heating means 38 at a temperature of 150°C to 200°C for 1 to 3 minutes, whereby the reaction and curing of the raw material M was developed so as to obtain an elastic sheet 12, and it was collected by means of a product-collecting roll 32b. Punching and other processing were applied to the resultant elastic sheet 12 into a predetermined shape so as to obtain a sealing member 10.

Then, from the sealing members of Examples 1-1 to 1-3, and Comparative Examples 1-1 and 1-2, the substrate films were released, whereby rectangular test specimens of a required thickness × 150 mm × 50 mm for determining a relative dielectric constant, and circular specimens of a required thickness × φ50 mm for determining a 50% CLD and a 75% CLD were obtained. With each of these specimens, the relative dielectric constant at each frequency of 10 kHz, 100 kHz and 1 MHz, and the 50% CLD (MPa) and the 75% CLD (MPa) were determined, and based on these determined results, the applicability as a sealing member of the present invention was evaluated using the indications "good" as Good, and "poor" as Not applicable. Additionally, polyols as used, and measuring methods and conditions were as follows:

(Used Polyols)

- • Polyether polyol-A: "GP-3000", trade name; Sanyo Chemical Industries, Ltd., (Average molecular weight is 3000, Hydroxyl value is 56.0 and EO content is 0%); and
- • Polyether polyol-B: "FA-103", trade name; Sanyo Chemical Industries, Ltd., (Molecular weight is 3300, Hydroxyl value is 50.0 and EO content is 80%)

(Measuring Methods and Conditions)

- Density: The weight of each of the specimens was determined by means of an electronic force balance, and then the density was calculated using the calculation formula:

$$\text{Density (kg/m}^3) = [\text{Weight (kg) of Specimen}]/[\text{Volume (m}^3) \text{ of Specimen}].$$

- • 50% CLD: A specimen was compressed to a thickness of 50% of the original thickness at a compression rate of 1 mm/min using a compression-testing machine, and then the load was determined. Thus the 50% CLD was calculated using the calculation formula:

$$\text{50\% CLD (MPa)} = [\text{Load (N) at 50\% compression}]/[\text{Area (cm}^2) \text{ of Specimen}].$$

- • 75% CLD: A specimen was compressed to a thickness of 75% of the original thickness at a compression rate of 1 mm/min using a compression-testing machine, and then the load was determined. Thus the 75% CLD was calculated using the calculation formula:

$$75\% \text{ CLD (MPa)} = [\text{Load (N) at } 75\% \text{ compression}]/[\text{Area (cm}^2) \text{ of Specimen}].$$

- • Relative Dielectric Constant: A relative dielectric constant at a predetermined frequency was determined using a relative dielectric constant meter "HP4192A", trade name; Hewlett-Packard Development Company).

Results of Example 1

The results are all listed in Table 1. From Table 1, it was confirmed that by setting the density to the range prescribed in the present invention, each of the 50% CLD and the 75% CLD is a value which sufficiently satisfies sealing properties. Furthermore, it was confirmed that by setting the EO content to the range prescribed in a preferred embodiment of the present invention, the relative dielectric constant at each frequency of 10 kHz, 100 kHz and 1 MHz is a low value in the range of 1 to 2.0.

[Table 1]

|  | Example 1-1 | Example 1-2 | Example 1-3 | Comp. Ex. 1-1 | Comp. Ex. 1-2 |
|---|---|---|---|---|---|
| Mixing Ratio of Foam-forming Gas (Volume %) | 91.0 | 86.0 | 76.0 | 71.0 | 62.0 |
| Density (kg/m$^3$) | 100 | 150 | 250 | 300 | 400 |
| EO Content (%) | 0 | 0 | 0 | 0 | 0 |
| Results |  |  |  |  |  |
| 50% CLD (MPa) | 0.004 | 0.005 | 0.025 | 0.036 | 0.060 |
| 75% CLD (MPa) | 0.030 | 0.039 | 0.320 | 0.480 | 0.750 |
| Relative Dielectric Constant 10kHz | 1.46 | 1.54 | 1.88 | 2.18 | 2.73 |
| 100kHz | 1.35 | 1.46 | 1.74 | 1.94 | 2.42 |
| 1MHz | 1.25 | 1.40 | 1.64 | 1.80 | 2.20 |
| Over-all Evaluation | good | good | good | poor | poor |

- In this Table, 50% CLD represents a compression load deflection at 50%, while 75% CLD represents a compression load deflection at 75%.

Example 2 With Respect to EO Content, and Relative Dielectric Constant

One hundred parts by weight of polyether polyol-A and polyether polyol-B at a percentage listed in Table 2 were mixed with 3 parts by weight of a cross-linking agent (1,4-butanol), 20 parts by weight of a thickening agent (aluminum hydroxide), 0.1 part by weight of a metallic catalyst (Stannous Octoate), and 3 parts by weight of a foam stabilizer (a silicone material; including a diluting solvent) so as to obtain a mixture. Into this mixture, nitrogen (a foam-forming gas), and polyisocyanate (crude MDI, NCO content: 31%) whose isocyanate index was set to 0.9 to 1.1 were blended at a flow rate of 0.1 NL/min so that the percentage described in Table 2 could be provided, and the blend was sheared to obtain a raw material M. Thereafter, according to Example 1, test specimens for Example 2-1 and Comparative Examples 2-1 to 2-3 were produced, and the relative dielectric constant, the 50% CLD and the 75% CLD were determined. Individual measuring methods and evaluation method were based on the ones in Example 1.

Results of Example 2

The results are all listed in Table 2. From Table 2, it was confirmed that by setting the EO content to the range prescribed in a preferred embodiment of the present invention, each of the relative dielectric constants at each frequency of 10 kHz, 100 kHz and 1 MHz is a low value in the range of 1 to 2.0.

[Table 2]

| | Example 2-1 | Comp. Ex. 2-1 | Comp. Ex. 2-2 | Comp. Ex. 2-3 |
|---|---|---|---|---|
| Mixing Ratio of Foam-forming Gas (Volume %) | 76.0 | 76.0 | 76.0 | 71.0 |
| Density (kg/m$^3$) | 250 | 250 | 250 | 300 |
| A/B | 75/25 | 70/30 | 0/100 | 0/100 |
| EO Content (%) | 20 | 24 | 80 | 80 |
| Results | | | | |
| 50% CLD (MPa) | 0.025 | 0.026 | 0.026 | 0.038 |
| 75% CLD (MPa) | 0.340 | 0.330 | 0.300 | 0.460 |
| Relative Dielectric Constant 10kHz | 1.95 | 2.05 | 2.10 | 2.50 |
| 100kHz | 1.85 | 1.98 | 2.05 | 2.42 |
| 1MHz | 1.75 | 1.85 | 1.96 | 2.30 |
| Over-all Evaluation | good | poor | poor | poor |

- In this Table, A/B represents the weight ratio of Polyether polyol-A to Polyether polyol-B.
- In this Table, 50% CLD represents a compression load deflection at 50%, while 75% CLD represents a compression load deflection at 75%.

As described above, in a method of producing a sealing member according to the present invention, a polyurethane-foam raw material as prepared by mixing a resin raw material and a foam-forming gas in a predetermined amount is used, and the density of the elastic sheet is set in the range of 100 to 250 kg/m$^3$, whereby the compression load deflection at 50% of the elastic sheet is in the range of 0.003 to 0.025 MPa, and the compression load deflection at 75% thereof is in the range of 0.02 to 0.40 MPa. Consequently, a sealing member is achieved having sufficient sealing properties at a high compression ratio can be produced. Furthermore, the setting of the density to the above range provides the advantage effect that the relative dielectric constant of the sealing member can be decreased. Accordingly, a casing is high in electric conductivity, and easily carries an electric current, and thus the sealing member can be suitably employed even for a casing wherein a disadvantage such as the occurrence of electromagnetic waves may be caused.

**Claims**

1. A method of producing a sealing member by supplying a resin raw material containing polyol and isocyanate as a main raw material and a foam stabilizer as an auxiliary material, the method being **characterized by**:

   feeding a polyurethane-foam raw material comprising 100% by volume of the resin raw material and 300% by volume or more of a foam-forming gas mixed, onto a substrate film and providing a surface protective film to an upper side of the substrate film to shape the raw material into a sheet;
   controlling the thickness of the polyurethane-foam raw material to be within a range of 0.3 to 3.0 mm by sandwiching the raw material between the substrate film and the surface protective film; and
   promoting the reaction and curing of the fed polyurethane-foam raw material so as to produce the sealing member comprising a polyurethane-foam having a thickness in the range of 0.3 to 3.0 mm, a density in a range of 100 to 250 kg/m$^3$, a compression load deflection at 50% in a range of 0.003 to 0.025 MPa, and a compression load deflection at 75% in a range of 0.02 to 0.40 MPa.

2. The method according to claim 1, **characterized in that** the method further includes the steps of separately preparing a carrier film and laminating the substrate film thereto, wherein the carrier film is releasable from the substrate film.

3. The method according to claim 1 or 2, **characterized in that** the polyurethane-foam raw material comprises polyol having an EO (ethylene oxide $(CH_2CH_2O)_n$) unit, and the ratio of the EO (ethylene oxide $(CH_2CH_2O)_n$) unit in the polyol is 20% or less.

4. The method according to any one of claims 1 to 3, **characterized in that** the mixing ratio of the foam-forming gas is set to be 300% by volume or more to 100% by volume of the resin raw material to obtain the porosity of the sealing member of 76% by volume or more.

5. The method according to claim 1, **characterized in that** the polyurethane-foam raw material includes a feed direction, and is reacted and cured in a state in which its thickness is restricted along the feeding direction.

6. The method according to claim 1, **characterized in that** a relative dielectric constant of the sealing member at each of the frequencies of 10 kHz, 100 kHz and 1 MHz is in the range of 1 to 2.0.

7. The method according to claim 1, **characterized in that** the foam constituting the sealing member includes cells having a cell diameter in a range of 20 to 500 $\mu$m.

8. The method according to claim 1, **characterized in that** the step of curing includes a step of heating the sealing member at a temperature of 150 °C to 200 °C.

**Patentansprüche**

1. Verfahren zur Herstellung eines Dichtungselements durch Bereitstellen eines Harz-Rohmaterials enthaltend Polyol und Isocyanat als Hauptrohmaterial und einen Schaumstabilisierer als Hilfsmaterial, wobei das Verfahren **gekennzeichnet ist durch**:

   Zuführen eines Polyurethan-Schaumrohmaterials umfassend 100 Volumen-% des Harz-Rohmaterials und 300 Volumen-% oder mehr eines schaumbildenden Gases gemischt auf einen Substratfilm und Bereitstellen eines Oberflächenschutzfilms an einer oberen Seite des Substratfilms, um das Rohmaterial in eine Folie zu formen; Kontrollieren der Dicke des Polyurethan-Schaumrohmaterials, damit es im Bereich von 0,3 bis 3,0 mm ist, indem das Rohmaterial zwischen dem Substratfilm und dem Oberflächenschutzfilm eingeschlossen wird; und Starten der Reaktion und Aushärten des zugeführten Polyurethan-Schaumrohmaterials, so dass ein Dichtungselement hergestellt wird, das einen Polyurethan-Schaum umfasst, der eine Dicke im Bereich von 0,3 bis 3,0 mm, eine Dichte im Bereich von 100 bis 250 kg/m$^3$, eine Stauchhärte bei 50% im Bereich von 0,003 bis 0,025 MPa und eine Stauchhärte bei 75% im Bereich von 0,02 bis 0,40 MPa aufweist.

2. Verfahren gemäß Anspruch 1, **dadurch gekennzeichnet, dass** das Verfahren ferner die Schritte des getrennten Herstellens eines Trägerfilms und des Laminierens des Substratfilms daran einschließt, wobei der Trägerfilm vom Substratfilm abgelöst werden kann.

3. Verfahren gemäß Anspruch 1 oder 2, **dadurch gekennzeichnet, dass** das Polyurethan-Schaum-Rohmaterial Polyol einen EO (Ethylenoxid $(CH_2CH_2O)_n$)-Anteil umfasst und der EO (Ethylenoxid $(CH_2CH_2O)_n$)-Anteil in dem Polyol 20% oder weniger ausmacht.

4. Verfahren gemäß einem der Ansprüche 1 bis 3, **dadurch gekennzeichnet, dass** das Mischverhältnis des schaumbildenden Gases auf 300 Volumen-% oder mehr zu 100 Volumen-% des Harz-Rohmaterials festgesetzt ist, um eine Porosität des Dichtungselements von 76 Volumen-% oder mehr zu erhalten.

5. Verfahren gemäß Anspruch 1, **dadurch gekennzeichnet, dass** das Polyurethan-schaum-Rohmaterial eine Zuführrichtung einschließt, und es in einem Zustand reagiert und ausgehärtet wird, in dem seine Dicke entlang der Zuführrichtung eingeschränkt ist.

6. Verfahren gemäß Anspruch 1, **dadurch gekennzeichnet, dass** eine relative dielektrische Konstante des Dichtungselements bei jeder der Frequenzen von 10 kHz, 100 kHz und 1 MHz in dem Bereich von 1 bis 2,0 ist.

**7.** Verfahren gemäß Anspruch 1, **dadurch gekennzeichnet, dass** der Schaum, der das Dichtungselement darstellt, Zellen mit einem Zelldurchmesser im Bereich von 20 bis 500 μm einschließt.

**8.** Verfahren gemäß Anspruch 1, **dadurch gekennzeichnet, dass** der Aushärtungsschritt einen Schritt des Erhitzens des Dichtungselements auf eine Temperatur von 150°C bis 200°C einschließt.

**Revendications**

**1.** Procédé consistant à produire un élément d'étanchéité en fournissant une matière brute de résine contenant du polyol et de l'isocyanate comme matière brute principale et un stabilisateur de mousse comme matière auxiliaire, le procédé étant **caractérisé par** :

amenée d'une matière brute de mousse de polyuréthane comprenant 100 % en volume de la matière brute de résine et 300 % en volume ou plus d'un gaz formateur de mousse mélangé, sur un film de substrat et fourniture d'un film protecteur de surface sur une face supérieure du film de substrat pour former la matière brute en une feuille ;
réglage de l'épaisseur de la matière brute de mousse de polyuréthane afin qu'elle soit comprise dans une plage de 0,3 à 3,0 mm en insérant la matière brute entre le film de substrat et le film protecteur de surface ; et
promotion de la réaction et durcissement de la matière brute de mousse de polyuréthane amenée de manière à produire l'élément d'étanchéité comprenant une mousse de polyuréthane ayant une épaisseur comprise dans la plage de 0,3 à 3,0 mm, une densité comprise dans une plage de 100 à 250 kg/m$^3$, une flexion de charge de compression à 50 % comprise dans une plage de 0,003 à 0,025 MPa, et une flexion de charge de compression à 75 % comprise dans une plage de 0,02 à 0,40 MPa.

**2.** Le procédé selon la revendication 1, **caractérisé en ce que** le procédé inclut en outre les étapes consistant à préparer séparément un film support et à laminer le film de substrat sur celui-ci, le film support étant détachable du film de substrat.

**3.** Le procédé selon la revendication 1 ou 2, **caractérisé en ce que** la matière brute de mousse de polyuréthane comprend du polyol ayant une unité d'EO (oxyde d'éthylène $(CH_2CH_2O)_n$), et le rapport de l'unité d'EO (oxyde d'éthylène $(CH_2CH_2O)_n$) dans le polyol est de 20 % ou moins.

**4.** Le procédé selon l'une quelconque des revendications 1 à 3, **caractérisé en ce que** le rapport de mélange du gaz formateur de mousse est réglé pour être de 300 % en volume ou plus à 100 % en volume de la matière brute de résine pour obtenir la porosité de l'élément d'étanchéité de 76 % en volume ou plus.

**5.** Le procédé selon la revendication 1, **caractérisé en ce que** la matière brute de mousse de polyuréthane inclut une direction d'amenée, et est mise en réaction et durcie dans un état dans lequel son épaisseur est restreinte le long de la direction d'amenée.

**6.** Le procédé selon la revendication 1, **caractérisé en ce qu'**une constante diélectrique relative de l'élément d'étanchéité à chacune des fréquences de 10 kHz, 100 kHz et 1 MHz est comprise dans la plage de 1 à 2,0.

**7.** Le procédé selon la revendication 1, **caractérisé en ce que** la mousse constituant l'élément d'étanchéité inclut des cellules ayant un diamètre de cellule compris dans une plage de 20 à 500 μm.

**8.** Le procédé selon la revendication 1, **caractérisé en ce que** l'étape de durcissement inclut une étape de chauffage de l'élément d'étanchéité à une température de 150 °C à 200 °C.

## Fig.1

## Fig.2

```
┌─────────────────────────────────────────────────────────┐
│    PREPARE POLYURETHANE-FOAM RAW MATERIAL                │─ S1
└─────────────────────────────────────────────────────────┘
                          ↓
┌─────────────────────────────────────────────────────────┐
│         FEED POLYURETHANE-FOAM RAW                       │
│      MATERIAL ONTO SUBSTRATE FILM                        │─ S2
└─────────────────────────────────────────────────────────┘
                          ↓
┌─────────────────────────────────────────────────────────┐
│ HEAT POLYURETHANE-FOAM RAW MATERIAL TO MAKE             │
│ INTO AN ELASTIC SHEET. BOND IT TO SUBSTRATE             │─ S3
│ FILM TO LAMINATE INTEGRALLY THEREWITH                   │
└─────────────────────────────────────────────────────────┘
                          ↓
┌─────────────────────────────────────────────────────────┐
│          PRODUCE SEALING MEMBER                          │
│   BY PUNCHING ETC. OF ELASTIC SHEET                      │─ S4
└─────────────────────────────────────────────────────────┘
                          ↓
                     COMPLETION
```

Fig.3

# Fig.4a

# Fig.4b

**EP 1 564 451 B1**

**REFERENCES CITED IN THE DESCRIPTION**

**Patent documents cited in the description**

- JP 2001100216 A
- WO 02062863 A
- JP 2003040958 A
- JP 53008735 A